# EUROPÄISCHE PATENTANMELDUNG

(11) **EP 2 189 316 A1**
(43) Veröffentlichungstag der Anmeldung: **26.05.2010**
(21) Anmeldenummer: 09013087.3
(22) Anmeldetag: 16.10.2009
(51) Int. Cl.: B60J 7/185

(54) **Verdeck mit Arretierung in Ablageposition**

(30) Priorität: 24.11.2008 DE 102008058802; 04.12.2008 DE 102008060544
(71) Anmelder: Webasto AG, 82131 Stockdorf (DE)
(72) Erfinder: Reinsch, Burkhard, 87600 Kaufbeuren (DE); Nishida, Kojiro, 82140 Olching (DE)
(74) Vertreter: advotec.

(57) **Zusammenfassung**

Es wird ein Kraftfahrzeug mit einem Verdeck (10) vorgeschlagen, das zwischen einer einen Fahrzeuginnenraum überdeckenden Schließstellung und einer diesen Innenraum freigebenden Ablagestellung verstellbar ist, umfassend ein bewegbar gelagertes Verdeckgestänge, an dem ein sich in Fahrzeugquerrichtung erstreckendes, in Schließstellung des Verdecks bugseitiges Verdeckelement (16) angeordnet ist, an dem eine Verschlussvorrichtung zum Festlegen der Schließstellung an einer festen Fahrzeugstruktur, ein Bedienhebel (20), der zwischen einer Riegel- und einer Freigabestellung verschwenkbar ist, sowie eine Verriegelungseinrichtung zur Sicherung des Frontspriegels (16) in der Ablagestellung des Faltverdecks (10) angeordnet sind. Die Verriegelungseinrichtung zur Sicherung des Frontspriegels (16) in der Ablagestellung des Faltverdecks (10) ist von dem Bedienhebel (20) gebildet, der in der Ablagestellung des Faltverdecks (10) mit einem karosseriefesten Riegelelement (42) zusammenwirkt.

## Beschreibung

Die Erfindung betrifft ein Kraftfahrzeug mit einem Verdeck nach dem Oberbegriff des Patentanspruchs 1.

Ein derartiges Kraftfahrzeug ist aus der Praxis bekannt und umfasst ein Faltverdeck, das zwischen einer einen Fahrzeuginnenraum überdeckenden Schließstellung und einer diesen Innenraum freigebenden Ablagestellung verstellbar ist. Zur Betätigung des Faltverdecks ist ein bewegbar gelagertes Verdeckgestell vorgesehen, an dem ein sich in Fahrzeugquerrichtung erstreckender Frontspriegel angeordnet ist, der eine so genannte Dachspitze darstellt. An dem Frontspriegel, der in Schließstellung des Faltverdecks an einem vorderen Windlauf des betreffenden Kraftfahrzeuges anliegt, ist eine Verschlussvorrichtung zum Festlegen der Schließstellung an dem Windlauf ausgebildet. Des Weiteren sind an dem Frontspriegel ein Bedienhebel, der zwischen einer Riegelstellung und einer Freigabestellung verschwenkbar ist, sowie eine Verriegelungseinrichtung zur Sicherung des Frontspriegels in der Ablagestellung des Faltverdecks angeordnet. Die Verriegelungseinrichtung umfasst schwenkbar gelagerte Riegelhaken, die über eine Hebelanordnung mittels des Bedienhebels betätigbar sind, welcher auch zur Betätigung der Verschlussvorrichtung dient. Die Hebelanordnung zur Betätigung der Riegelhaken erfordert eine Vielzahl an Bauteilen, die zu Lasten der Kosten und des Gewichts des Faltverdecks ergehen. Die Riegelhaken, die beidseits des Faltverdecks angeordnet sind, können des Weiteren häufig nur bei einem aktiven Niederdrücken des Verdecks durch einen Benutzer auf beiden Seiten in Eingriff gebracht werden.

Ferner ist es aus der Praxis bekannt, ein Faltverdeck in seiner Ablagestellung mittels beidseits angeordneter Drehfallenschlösser zu sichern, die auf das betreffende Verdeckgestänge in dessen Ablagestellung wirken. Eine Verriegelung erfolgt hierbei durch ein aktives Niederdrücken des Verdecks durch einen Benutzer, wobei der Benutzer hierzu gegebenenfalls um das Fahrzeug herumlaufen muss. Eine Freigabe der Drehfallenschlösser erfolgt durch Betätigung von Tastern, die jeweils an den Drehfallenschlössern ausgebildet sind. Auch sind elektrisch angetriebene Drehfallenschlösser bekannt, die ferngesteuert komfortabel per Knopfdruck gelöst werden können.

Aus der EP 0 763 439 B1 ist des Weiteren eine Lösung zur Sicherung eines Frontspriegels eines Faltverdecks bekannt, bei der die zur Sicherung der Schließstellung des Faltverdecks genutzte Verschlussvorrichtung auch zur Sicherung der Ablagestellung genutzt wird. Diese Lösung ist aber nicht bei Faltverdecken einsetzbar, bei denen der Frontspriegel in Ablagestellung mit seiner in Schließstellung dem Fahrzeuginnenraum zugewandten Seite nach oben weist, da hier die Verschlussvorrichung nicht mit entsprechenden Gegenlagern in einem Verdeckablagekasten zusammenwirken könnte.

Der Erfindung liegt die Aufgabe zugrunde, ein Kraftfahrzeug mit einem Verdeck der einleitend genannten Gattung mit einem gegenüber dem Stand der Technik erhöhten Bedienkomfort mit einem geringeren Einsatz an Bauteilen zu schaffen.

Diese Aufgabe ist erfmdungsgemäß durch das Kraftfahrzeug mit den Merkmalen des Patentanspruchs 1 gelöst.

Der Kern der Erfindung liegt mithin darin, dass der Bedienhebel selbst die Verriegelungseinrichtung zur Festlegung der Ablagestellung des Verdecks bildet und hierzu mit dem ein Gegenlager bildenden karosseriefesten Riegelelement zusammenwirkt. Es sind mithin gegenüber dem Stand der Technik auf Seiten des bugseitigen Verdeckelements, das im Falle eines Faltverdecks ein Frontspriegel bzw. eine Dachspitze darstellt, keine weiteren Kraftübertragungselemente wie Hebel oder dergleichen erforderlich, um das Verdeckelement in seiner Ablagestellung gegenüber der Fahrzeugkarosserie zu sichern. Allein durch Verschwenken des Bedienhebels kann der verriegelte Zustand des Verdeckelements in dessen Ablagestellung erreicht werden, wobei der Bedienhebel dann in Eingriff mit dem Riegelelement steht und das Verdeckelement gegenüber dem Fahrzeugaufbau fixiert.

Durch den Bedienhebel, der ein zentrales Verschlusselement für die Ablageverriegelung des Verdeckelements und die Verriegelungseinrichtung für die Ablagestellung des Verdeckelements bildet, kann gegenüber dem Stand der Technik durch die geringere Anzahl an erforderlichen Bauteilen eine Gewichts- und Kosteneinsparung erreicht werden. Der Bedienhebel stellt eine einfache manuelle Bedienmöglichkeit an nur einer zentralen Stelle des Verdecks zur Erlangung einer Ablageverriegelung dar. Weite Wege um das Fahrzeug herum entfallen.

Das Verdeck ist insbesondere ein Faltverdeck eines Cabriolets, kann aber auch ein aus starren Verdeckelementen aufgebautes Hartdach eines Cabriolets sein.

Bei einer bevorzugten Ausführungsform des Kraftfahrzeugs nach der Erfindung ist der Bedienhebel über eine Antriebskinematik mit der Verschlussvorrichtung zur Festlegung der Schließstellung des Verdecks verbunden, so dass mithin der Bedienhebel des Frontverschlusssystems auch das Verschlusselement zur Festlegung des Verdecks in dessen Ablageposition darstellt. Der Bedienhebel hat dann also eine Doppelfunktion, nämlich die zur Betätigung der Verschlussvorrichtung zum Festlegen der Schließstellung des Verdecks und die zur Sicherung des Verdecks in seiner Ablageposition.

Vorteilhafterweise ist der Bedienhebel so ausgebildet, dass er einen Griffabschnitt und einen Riegelabschnitt aufweist, welche Abschnitte an einander abgewandten Seiten einer an dem Verdeckelement ausgebildeten Schwenkachse des Bedienhebels angeordnet sind.

Um günstige Hebelverhältnisse zu erzielen und dem Bedienhebel zur Sicherung der Ablagestellung mit geringen Kräften betätigen zu können, ist der Griffabschnitt vorzugsweise an einem langen Hebelbereich und der Riegelabschnitt an einem kurzen Hebelbereich des Bedienhebels ausgebildet. Der Bereich des Bedienhebels, der mit dem karosseriefesten Riegelelement zusammenwirkt, hat mithin vorzugsweise einen geringeren Abstand zur Schwenkachse des Bedienhebels als der Griffbereich des Bedienhebels. Dem Benutzer steht also ein Hebelarm mit positivem Übersetzungsverhältnis zur Verfügung, um das Verdeck mit einer Vorspannung gegen das ein Gegenlager bildende Riegelelement in seine Ablagestellung zu zwingen.

Um den Bedienhebel und das Riegelelement in Eingriff zu bringen, kann der Bedienhebel einen Haken, eine Klinke oder einen Bolzen umfassen. Dieses Bauelement greift dann in Ablagestellung des Verdecks in eine korrespondierende Aufnahme des Riegelelements ein.

Bei einer bevorzugten Ausführungsform weist aber der Bedienhebel eine Aufnahme für das karosseriefeste Riegelelement auf. In Ablagestellung des bugseitigen Verdeckelements und in Riegelstellung des Bedienhebels greift in diese Aufnahme eine vorzugsweise starre Lasche oder ein Bolzen ein, die bzw. der fahrzeugfest ausgebildet ist und das Riegelelement bildet. Der Bedienhebel liegt zur Fixierung des bugseitigen Verdeckelements in Fahrzeugquerrichtung und in Fahrzeuglängsrichtung über entsprechende Wirkflächen an der Lasche bzw. dem Bolzen an.

Beispielsweise ist die Lasche, die in die Aufnahme des Bedienhebels eingreift, eine Lasche, die mit einem freien Ende in Richtung Fahrzeugboden weist und von oben in die Aufnahme des Bedienhebels eingreift.

Um den Fahrzeuginsassen in der Schließstellung des Faltverdecks ein anmutendes Erscheinungsbild des Bedienhebels zu bieten, ist bei einer bevorzugten Ausführungsform eine Blende oder Abdeckung für die Aufnahme des Bedienhebels vorgesehen. Die Blende bzw. Abdeckung ist vorzugsweise verschiebbar oder verschwenkbar ausgebildet.

Vorzugsweise ist die Blende so ausgebildet, dass sie die Aufnahme des Bedienhebels in der Freigabestellung des Bedienhebels freigibt und vorzugsweise mittels eines Federelements in Richtung ihrer die Aufnahme überdeckenden Abdeckstellung vorgespannt ist.

Um den Bedienhebel selbst in seiner Riegelstellung sichern zu können, ist der Bedienhebel vorzugsweise selbst mit einer lösbaren Sperrvorrichtung versehen, die zumindest die Riegelstellung sichert. Eine Betätigung des Faltverdecks ist damit erst nach Lösen der Sperrvorrichtung möglich.

Die Sperrvorrichtung umfasst vorzugsweise einen in Sperrrichtung vorgespannten Entriegelungstaster, der insbesondere zur Betätigung eines Sperrschiebers dient, der die Riegelstellung des Bedienhebels sichert. Der Entriegelungstaster und der Sperrschieber wirken beispielsweise über mindestens eine Rampe zusammen.

Weitere Vorteile und vorteilhafte Ausgestaltungen des Gegenstandes der Erfmdung sind der Beschreibung, der Zeichnung und den Patentansprüchen entnehmbar.

Ein Ausführungsbeispiel eines erfindungsgemäß ausgebildeten Faltverdecks ist in der Zeichnung schematisch vereinfacht dargestellt und wird in der nachfolgenden Beschreibung näher erläutert. Es zeigt:
- Fig. 1: eine Seitenansicht eines Faltverdecks in Schließstellung;
- Fig. 2: eine vergrößerte Ansicht eines eine Dachspitze umfassenden Bereichs II in Fig. 1;
- Fig. 3: eine Fig. 2 entsprechende Ansicht, jedoch mit Bedienhebel in Freigabestellung;
- Fig. 4: eine Unteransicht eines den Bedienhebel aufweisenden Bereichs der Dachspitze;
- Fig. 5: eine Draufsicht auf das Faltverdeck in dessen ungesicherter Ablagestellung;
- Fig. 6: eine Fig. 5 entsprechende Ansicht, jedoch im gesicherten Zustand;
- Fig. 7: eine Seitenansicht des Faltverdecks in der ungesicherten Ablagestellung;
- Fig. 8: eine Seitenansicht des Faltverdecks in der gesicherten Ablagestellung;
- Fig. 9: eine Draufsicht auf den Bedienhebel;
- Fig. 10: eine Unteransicht des Bedienhebels; und

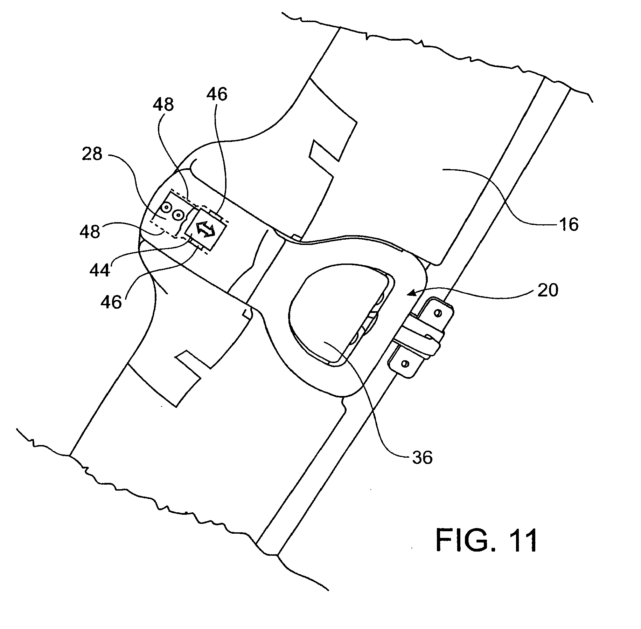

- Fig.11: eine Blende zur Abdeckung einer Aufnahme des Bedienhebels

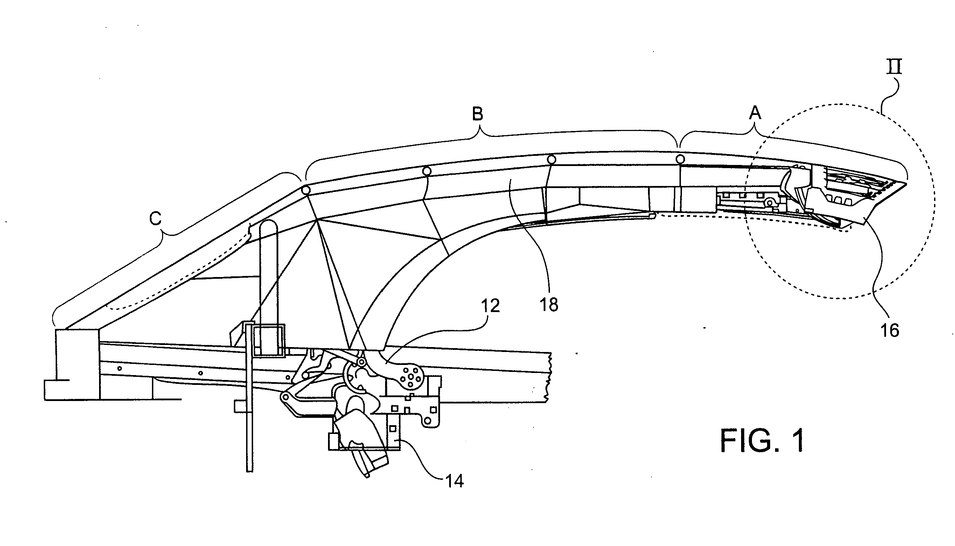

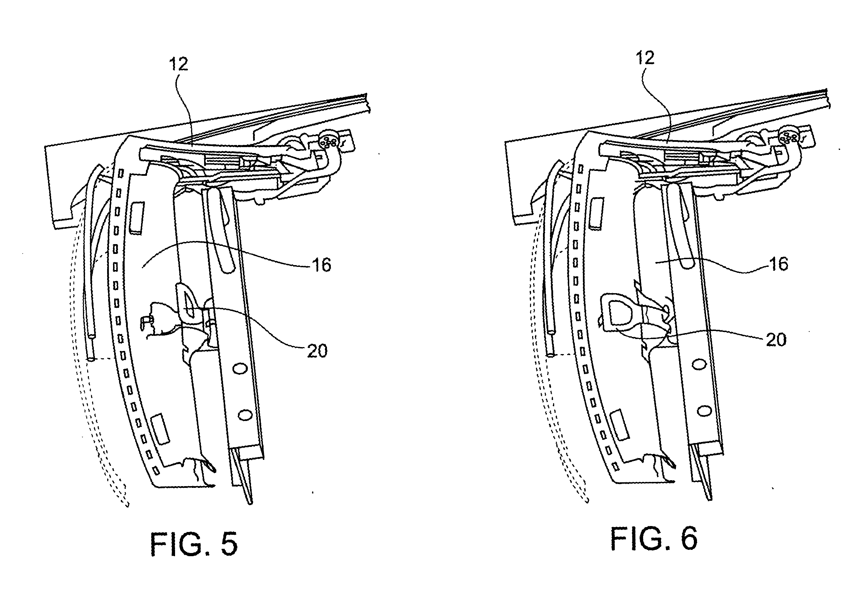

In der Zeichnung ist ein Faltverdeck 10 eines ansonsten nicht näher dargestellten, als Cabriolet ausgebildeten Kraftfahrzeugs dargestellt. Dieses Faltverdeck 10 ist wahlweise zwischen einer in den Figuren 1 bis 3 dargestellten Schließstellung und einer in den Figuren 5 bis 8 dargestellten Ablagestellung manuell verstellbar und weist hierzu ein Verdeckgestänge 12 auf, das in üblicher Weise bezogen auf eine Fahrzeuglängsmittelebene beidseits jeweils an einem Hauptlager 14 schwenkbar gelagerte Lenker in Gestalt eines Hauptlenkers und einer Hauptsäule aufweist und an dem ein faltbarer Verdeckstoff 18 aufgespannt ist. Das Faltverdeck 10 ist in seiner Ablagestellung zusammengefaltet in einem heckseitigen Verdeckablagekasten abgelegt.

An seinem in Schließstellung vorderen Ende ist an dem Verdeckgestänge 12 eine Dachspitze 16 angeordnet, die ein bugseitiges Verdeckelement bildet, sich in Fahrzeugquerrichtung erstreckt und die beidseits der Fahrzeuglängsmittelebene angeordneten Gestängebereiche des Verdeckgestänges 12 verbindet. In der Schließstellung des Faltverdecks 10 ist die einen Frontspriegel darstellende Dachspitze 16 an einem hier nicht näher dargestellten vorderen Windlauf des Kraftfahrzeugs gesichert und hierzu mit einer Verschlussvorrichtung versehen.

Zur Betätigung der vorstehend genannten Verschlussvorrichtung zur Sicherung der Schließstellung des Verdecks an dem vorderen Windlauf ist an der Dachspitze 16 ein Bedienhebel 20 angeordnet, der um eine sich in Fahrzeugquerrichtung erstreckende Schwenkachse 22 schwenkbar ist und über eine nicht dargestellte Hebelkinematik mit der Verschlussvorrichtung verbunden ist. Der Bedienhebel 20 weist einen Griffabschnitt 24, der auf einer Seite der Schwenkachse 22 angeordnet ist und in Form eines Griffauges ausgebildet ist, sowie einen so genannten Riegelabschnitt 26 auf, der mit einer fensterartigen oder auch muldenförmigen Aufnahme 28 versehen ist, deren Funktion sich aus der nachfolgenden Beschreibung ergibt. Der Griffabschnitt 24 stellt einen langen Hebelbereich und der Riegelabschnitt 26 stellt einen kurzen Hebelbereich des Bedienhebels 22 dar.

Beim Ablegen des Faltverdecks 10 schwenkt ein vorderer, die Dachspitze 16 umfassender Verdeckabschnitt A gegenüber einem sich an diesen Verdeckabschnitt A anschließenden, mittleren Verdeckabschnitt B nach hinten um, so dass der vordere Verdeckabschnitt A in der Ablagestellung, in der ein hinterer Verdeckabschnitt C am Hauptlager 14 nach hinten umgeschwenkt ist und der mittlere Verdeckabschnitt B auf diesen geschwenkt ist, mit seiner in Schließstellung dem Fahrzeuginnenraum zugewandten Sichtfläche nach oben weist und die Dachspitze 16 mit ihrer freien Stirnseite in Richtung Fahrzeugheck weist. Diese Art der Ablage des Faltverdecks 10 stellt eine konventionelle Art einer Verdeckfaltung dar.

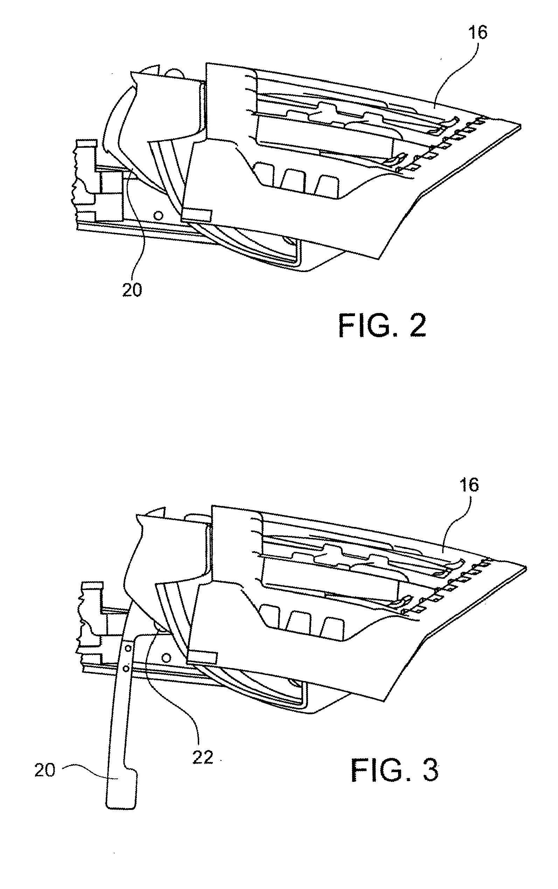

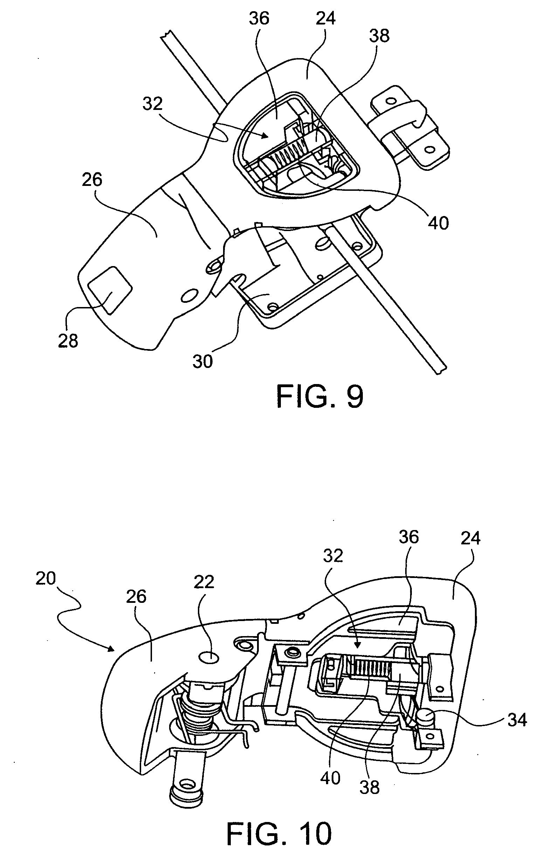

Der in den Figuren 9 und 10 detailliert dargestellte Bedienhebel 20 ist an einem Lagerbauteil 30 schwenkbar gelagert, so dass er aus seiner in Fig. 2 dargestellten Sperrstellung bezüglich der Dachspitze 16 nach unten und hinten ausgeschwenkt werden kann, so dass die in Fig. 3 dargestellte Stellung erreicht wird. Zur Sicherung der Sperr- bzw. Riegelstellung des Bedienhebels 20 ist eine Sperrvorrichtung 32 vorgesehen, die einen um eine Achse 34 schwenkbaren Taster 36 umfasst, durch dessen Betätigung ein Sperrschieber 38, der mittels einer Feder 40 in Sperrrichtung vorgespannt ist, aus einem an dem Griffabschnitt 24 des Bedienhebels 20 ausgebildeten Hintergriff gezogen wird und der Bedienhebel 20 um seine Achse 22 in Freigabestellung verschwenkt werden kann. Der Bedienhebel 20 entspricht in der Systematik eines Schlosses einer so genannten Drehfalle, wobei der Sperrschieber 38 eine so genannte Sperrklinke darstellt.

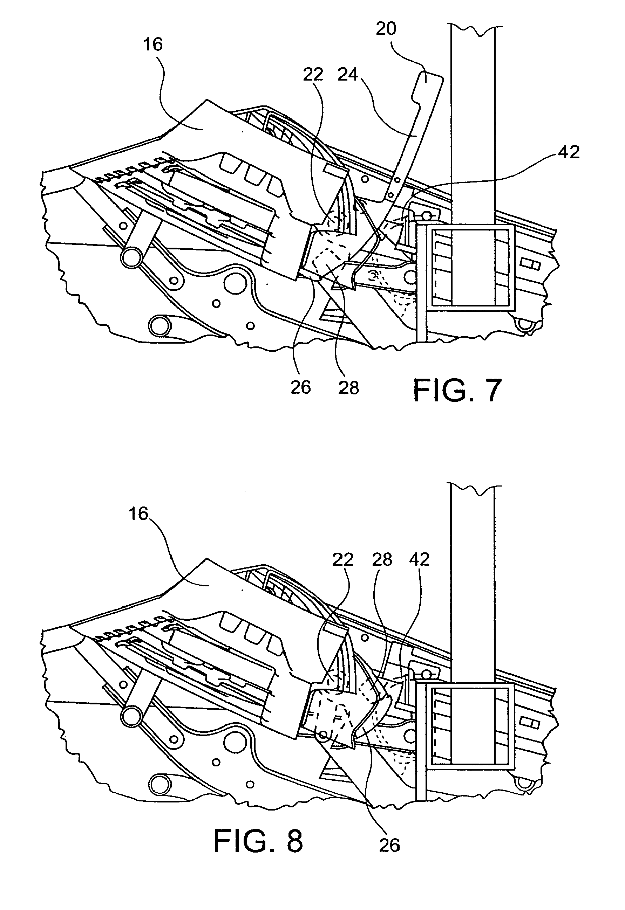

Nach dem Entsichern der Dachspitze 16 gegenüber dem vorderen Windlauf kann das Verdeck 10 in die in den Figuren 5 bis 8 dargestellte Ablagestellung gebracht werden. Während dieses Verstellvorgangs ist der Bedienhebel 20 in seiner Freigabestellung (Figuren 5 und 7). Nach Erreichen der Ablagestellung wird der Bedienhebel 20 wieder in seine Riegelstellung geschwenkt, so dass die an dem Riegelabschnitt 26 ausgebildete Aufnahme 28 mit einem ein Gegenlager bildenden Riegelelement 42 in Eingriff steht, das aus einer am fahrzeugbugseitigen Rand des Verdeckablagekastens angeordneten Zunge bzw. Lasche gebildet ist, die in Richtung Fahrzeugheck schräg nach unten weist und gewinkelt ausgebildet ist. Durch den Eingriff des Riegelelements 42 in die Aufnahme 28 des Bedienhebels 20 ist die Dachspitze 16 und damit das Faltverdeck 10 in Ablagestellung gegenüber der Fahrzeugkarosserie in Fahrzeuglängsrichtung und Fahrzeugquerrichtung gesichert.

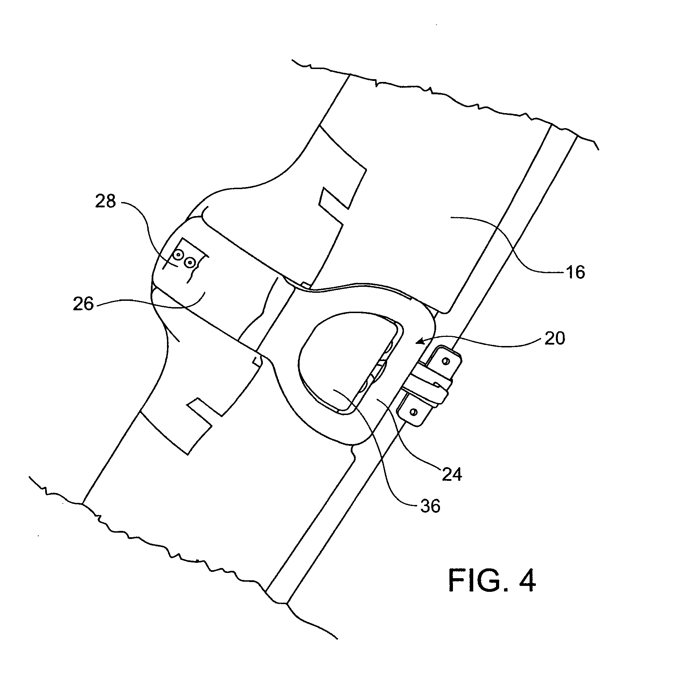

Die Aufnahme 28 des Riegelabschnitts 26 weist eine Blende 46 auf, die beweglich ausgebildet ist und insbesondere in der in den Figuren 1 bis 4 dargestellten Schließstellung des Faltverdecks 10 die Wirkflächen der Aufnahme 28 so abdeckt, dass Gebrauchsspuren verdeckt sind und das Erscheinungsbild des Bedienhebels 20 nicht stören. Die Blende 44 ist über seitliche Gleitelemente 46 in Führungskulissen 48 geführt und in Richtung der Abdeckstellung mittels geeigneter Federelemente vorgespannt. Beim Verschwenken des Bedienhebels 20 aus seiner Riegelstellung in seine Freigabestellung wird die plattenförmige Blende 44, deren Abmessungen den Abmessungen der Aufnahme 28 entsprechen, aus der Aufnahme 28 in einen nicht einsehbaren Bereich des Riegelabschnitts 26 des Bedienhebels 20 verfahren, so dass das Riegelelement 26 in der Ablagestellung des Faltverdecks 10 durch Verschwenken des Bedienhebels 20 in die Aufnahme 28 eintauchen kann. Beim Verschwenken des Bedienhebels 20 in seine Riegelstellung fährt die Blende durch die Wirkung der Federelemente in Richtung der Aufnahme 28. In der Ablagestellung des Faltverdecks 10 liegt die Blende 44 dann seitlich an dem Riegelelement 42 an. In der Schließstellung des Faltverdecks ist die Blende dann in der Aufnahme 28 angeordnet.

Das fmgerartig ausgebildete Riegelelement 42 kann bei einer alternativen Ausführungsform schwenkbar an den Fahrzeugaufbau angelenkt sein und mittels einer Rückstellfeder in seine in der Zeichnung dargestellte Stellung vorgespannt sein. Bei dieser Ausführungsform ist es möglich, den Bedienhebel 20 beim Öffnen des Faltverdecks 10 nach der Freigabe gegenüber den vorderen Windlauf in die Riegelstellung zu bringen, wobei dann das Riegelelement 42 beim Zurückschwenken des Faltverdecks 10 von einer äußeren Wirkfläche des Bedienhebels 20 gegen die Kraft der Rückstellfeder aus der Bewegungsbahn der Dachspitze 16 gedrückt bzw. verschwenkt wird und, sobald die Dachspitze 16 die Ablagestellung erreicht hat, zurückschnappt und in die Aufnahme 28 eingreift.

### Bezugszeichenliste

- 10: Faltverdeck
- 12: Verdeckgestänge
- 14: Hauptlager
- 16: Dachspitze
- 18: Verdeckstoff
- 20: Bedienhebel
- 22: Schwenkachse
- 24: Griffabschnitt
- 26: Riegelabschnitt
- 28: Aufnahme
- 30: Lagerbauteil
- 32: Sperrrichtung
- 34: Achse
- 36: Taster
- 38: Sperrschieber
- 40: Feder
- 42: Riegelelement
- 44: Blende
- 46: Gleiter
- 48: Kulissenbahnen

## Patentansprüche

1. Kraftfahrzeug mit einem Verdeck (10), das zwischen einer einen Fahrzeuginnenraum überdeckenden Schließstellung und einer diesen Innenraum freigebenden Ablagestellung verstellbar ist, umfassend ein bewegbar gelagertes Verdeckgestänge (12), an dem ein sich in Fahrzeugquerrichtung erstreckendes, in Schließstellung bugseitiges Verdeckelement (16) angeordnet ist, an dem eine Verschlussvorrichtung zum Festlegen der Schließstellung an einer festen Fahrzeugstruktur, ein Bedienhebel (20), der zwischen einer Riegel- und einer Freigabestellung verschwenkbar ist, sowie eine Verriegelungseinrichtung zur Sicherung des Verdeckelements (16) in der Ablagestellung des Verdecks (10) angeordnet sind, **dadurch gekennzeichnet, dass** die Verriegelungseinrichtung zur Sicherung des Verdeckelements (16) in der Ablagestellung des Verdecks (10) von dem Bedienhebel (20) gebildet ist, der in der Ablagestellung des Faltverdecks (10) mit einem karosseriefesten Riegelelement (42) zusammenwirkt.

2. Kraftfahrzeug nach Anspruch 1, **dadurch gekennzeichnet, dass** der Bedienhebel (20) über eine Antriebskinematik mit der Verschlussvorrichtung zur Festlegung der Schließstellung des Verdecks (10) an einer festen Fahrzeugstruktur verbunden ist.

3. Kraftfahrzeug nach Anspruch 1 oder 2, **dadurch gekennzeichnet, dass** der Bedienhebel (20) einen Griffabschnitt (24) und einen Riegelabschnitt (26) aufweist, welche Abschnitte an entgegengesetzten Seiten einer Schwenkachse (22) des Bedienhebels (20) angeordnet sind.

4. Kraftfahrzeug nach Anspruch 3, **dadurch gekennzeichnet, dass** der Griffabschnitt (24) an einem langen Hebelbereich und der Riegelabschnitt (26) an einem kurzen Hebelbereich des Bedienhebels (20) ausgebildet sind.

5. Kraftfahrzeug nach einem der Ansprüche 1 bis 4, **dadurch gekennzeichnet, dass** der Bedienhebel einen Haken, eine Klinke oder einen Bolzen zum Eingriff mit dem Riegelelement umfasst.

6. Kraftfahrzeug nach einem der Ansprüche 1 bis 4, **dadurch gekennzeichnet, dass** eine Aufnahme (28) für das karosseriefeste Riegelelement (42) aufweist.

7. Kraftfahrzeug nach einem der Ansprüche 1 bis 6, **dadurch gekennzeichnet, dass** das karosseriefeste Riegelelement (42) von einer Lasche gebildet ist, die mit einem freien Ende in Richtung Fahrzeugboden weist.

8. Kraftfahrzeug nach einem der Ansprüche 1 bis 7, **gekennzeichnet durch** eine Blende (44) für die Aufnahme (28) des Bedienhebels (20).

9. Kraftfahrzeug nach Anspruch 8, **dadurch gekennzeichnet, dass** die Blende (44) verschiebbar oder verschwenkbar ist.

10. Kraftfahrzeug nach Anspruch 8 oder 9, **dadurch gekennzeichnet, dass** die Blende (44) die Aufnahme (28) in der Freigabestellung des Bedienhebels (20) freigibt und vorzugsweise mittels eines Federelements in Richtung ihrer Abdeckposition vorgespannt ist.

11. Kraftfahrzeug nach einem der Ansprüche 1 bis 10, **dadurch gekennzeichnet, dass** der Bedienhebel (20), der zwischen der Sperrstellung und der Freigabestellung verschwenkbar ist, eine lösbare Sperrvorrichtung (32) umfasst, die zumindest die Riegelstellung sichert.

12. Kraftfahrzeug nach Anspruch 11, **dadurch gekennzeichnet, dass** die Sperrvorrichtung (32) einen in Sperrrichtung vorgespannten Entriegelungstaster (36) umfasst, der vorzugsweise zur Betätigung eines Sperrschiebers (38) dient, der die Riegelstellung des Bedienhebels (20) sichert.
